# EUROPÄISCHE PATENTSCHRIFT

(11) **EP 3 451 513 B1**
(45) Veröffentlichungstag und Bekanntmachung des Hinweises auf die Patenterteilung: **23.06.2021**
(21) Anmeldenummer: 18170332.3
(22) Anmeldetag: 02.05.2018
(51) Int. Cl.: H02K 37/24, G01D 5/00, H02K 26/00

(54) **RUNDLÄUFERMASCHINE ZUR BEHANDLUNG VON BEHÄLTERN**
ROTARY MACHINE FOR HANDLING CONTAINERS
MACHINE ROTATIVE DESTINÉE AU TRAITEMENT DE RÉCIPIENTS

(30) Priorität: 04.09.2017 DE 102017215443
(43) Veröffentlichungstag der Anmeldung: 06.03.2019
(73) Patentinhaber: Krones AG, 93073 Neutraubling (DE)
(72) Erfinder: Peutl, August, 93073 Neutraubling (DE); Strauss, Johannes, 93073 Neutraubling (DE); Bauer, Veronika, 93073 Neutraubling (DE)
(74) Vertreter: Grünecker Patent- und Rechtsanwälte PartG mbB

(56) Entgegenhaltungen:
- EP-A2- 2 897 254
- DE-A1-102008 038 146
- DE-A1-102012 204 721
- DE-T2- 60 019 192
- US-A1- 2015 076 939

## Beschreibung

Die Erfindung betrifft eine Rundläufermaschine gemäß Oberbegriff des Anspruchs 1 bzw. 2.

Gattungsgemäße Rundläufermaschinen zur Behandlung von Behältern sind aus der DE 10 2013 218438 A1 bekannt. Zur direkten Drehlagenbestimmung des Behältertisches, also ohne indirekte Drehzahlmessung am Antriebsmotor und/oder einem zwischengeschalteten Getriebe, dient dabei ein zentral an der Mittelachse der Rundläufermaschine angeordneter Drehgeber. Der Antriebsmotor reicht in radialer Richtung über den Drehgeber hinaus.

Aus der DE 2008 038 146 A1 ist ferner eine Rundläufermaschine bekannt, die mit Ausnahme einer radial innenliegenden Lagerung des Behältertisches bzw. seiner Tragstruktur gattungsgemäß ausgebildet ist. Der Drehgeber ist zweckmäßigerweise entweder direkt an einem unteren im Motor zugänglich platzierten Ende der Zentralwelle oder direkt am oberen Wellenende installiert. Es kann sich dabei um einen Drehimpulsgeber, einen Absolutwertgeber und/oder einen Mittendrehgeber handeln. Das Gebersystem kann jedoch auch seitlich am oder neben dem Motor angeordnet und mit dem Wellenende über einen Zahnriemen gekoppelt sein.

Da Rundläufermaschinen mit immer größeren Teilkreisdurchmessern benötigt werden und Drehgeber für Instandhaltungsmaßnahmen gut zugänglich sein sollen, besteht zunehmend Bedarf für eine präzisere Drehlagenbestimmung und einen verbesserten Zugang zu Antriebskomponenten und Drehgebern des Behältertisches.

Die gestellte Aufgabe wird mit einer Rundläufermaschine zur Behandlung von Behältern gemäß Anspruch 1 bzw. 2 gelöst. Demnach umfasst die Rundläufermaschine ein feststehendes Untergestell, einen drehbaren Behältertisch zur Aufnahme der Behälter, einen als Innenläufer ausgebildeten Motor zum Direktantrieb des Behältertisches, ein Lager zum Abstützen des Behältertisches und/oder einer drehfest mit dem Behältertisch verbundenen Tragstruktur am Untergestell radial außerhalb des Motors, und einen Drehgeber zur Drehlagenbestimmung des Behältertisches.

Dadurch, dass der Drehgeber radial außerhalb des Motors angeordnet ist, lässt sich sowohl die Genauigkeit des Drehgebers, insbesondere dessen Winkelauflösung, als auch die Zugänglichkeit des Drehgebers für Instandhaltungsmaßnahmen gegenüber einem zentral in dem Bereich des Motors angeordneten Drehgeber verbessern.

Der Drehgeber besteht aus wenigstens einem Sensor und wenigstens einer vom Sensor abgetasteten Maßverkörperung.

Unter einer Anordnung radial außerhalb des Motors ist zu verstehen, dass sowohl Sensor als auch Maßverkörperung radial außerhalb des Stators und des Rotors des Motors angeordnet sind.

Der Drehgeber umfasst demnach entweder: einen feststehenden und mit dem Untergestell verbundenen Sensor und eine am Behältertisch oder an der Tragstruktur ausgebildete / befestigte Maßverkörperung für den Sensor; oder einen am Behältertisch oder an der Tragstruktur ausgebildeten / befestigten Sensor und eine feststehende und mit dem Untergestell verbundene Maßverkörperung für den Sensor.

Bei einem Innenläufer sind der Behältertisch und/oder seine Tragstruktur mit dem innen liegenden Rotor des Motors verbunden.

Das Lager ist zur Aufnahme der im Arbeitsbetrieb auftretenden Axialkräfte und Radialkräfte ausgebildet.

Vorzugsweise ist der Drehgeber im Bereich des Behältertisches und/oder der Tragstruktur in einem radialen Abstand von weniger als 0,2 m vom Lager angeordnet. Dies ermöglicht eine schwingungsarme und damit genauere Messung der Drehlage infolge einer erhöhten mechanischen Stabilität in der Nachbarschaft des Lagers. Die radiale Position des Lagers wird beispielsweise durch den Mittelpunkt des Lagerquerschnitts vorgegeben.

Umfasst der Drehgeber einen feststehenden Sensor, so werden die elektrische Stromversorgung und das Auslesen von Messdaten vereinfacht.

Umfasst der Drehgeber eine am Behältertisch und/oder Tragstruktur ausgebildete und/oder befestigte Maßverkörperung für den Sensor, so lässt sich die Maßverkörperung in geeignetem radialen Abstand von der Mittelachse des Behältertisches anordnen.

Vorzugsweise ist die Maßverkörperung unterhalb und/oder radial außerhalb des Lagers angeordnet. Dies erhöht die Präzision der Drehlagenbestimmung und erleichtert den Zugang zum Drehgeber für Instandhaltungsmaßnahmen.

Vorzugsweise ist der Motor ein Torquemotor. Vorzugsweise ist das Lager ein Axial-Radial-Lager und insbesondere ein Kreuzrollenlager. Dies ermöglicht beispielsweise ein Vorspannen des Lagers zur Minimierung von Planlauf-Abweichungen des Behältertisches und/oder Parallelität-Abweichungen zwischen Behältertisch und Untergestell.

Vorzugsweise weist das Lager eine Planlauf-Abweichung von höchstens 0,015 mm zum Behältertisch hin auf und/oder eine Parallelitäts-Abweichung von höchstens 0,15 mm zum Behältertisch und zum Untergestellt hin auf. Damit lässt sich eine präzise Behälterbehandlung auch bei Teilkreisdurchmessern von wenigstens 1,5 m erzielen.

Vorzugsweise hat der Behältertisch einen Teilkreisdurchmesser von 1,5 bis 2,5 m. Damit lassen sich Behälter mit vergleichsweise hoher Maschinenleistung behandeln. Eine Drehlagenmessung radial außerhalb des Motors ist dann besonders vorteilhaft für eine präzise Behandlung.

Vorzugsweise ist das Lager radial zwischen dem Motor und dem Teilkreis des Behältertisches angeordnet. Das Lager liegt dann insbesondere radial innerhalb von Antriebsmotoren für Drehteller zur Aufnahme der Behälter. Dies begünstigt eine mechanisch stabile und dennoch kompakte Bauweise der Rundläufermaschine.

Vorzugsweise ist die Rundläufermaschine als Direktdruckmaschine, Etikettiermaschine, Verschließer, Füller, Streckblasmaschine, Rinser, Inspektionsmaschine oder andere Behälterbehandlungsmaschine ausgebildet. Die präzise Drehlagenbestimmung des zugehörigen Behältertisches dient einem präzisen Zusammenwirken mit den jeweils an der Rundläufermaschine vorhandenen Behandlungsaggregaten. Diese können beispielsweise stationär angedockt sein und/oder am Behältertisch umlaufen. Zudem ist der Zugang zum Drehgeber beispielsweise für Kontrolle und/oder Ersatz der Sensoren und/oder der Maßverkörperung je nach Instandhaltungsintervallen erleichtert.

Vorzugsweise ist der Stator des Motors hängend und nach unten hin lösbar am Untergestell befestigt. Dies erleichtert Instandhaltungsmaßnahmen am Motor.

Vorzugsweise ist der Rotor des Motors als Hohlwelle ausgebildet und/oder umgibt eine Hohlwelle. Die Hohlwelle kann dann für Medienverbindungen zwischen dem feststehenden Teil und dem rotierenden Teil der Rundläufermaschine verwendet werden.

Vorzugsweise sind dann innerhalb der Hohlwelle Leitungen zur Medienversorgung, insbesondere zur Energieversorgung, Druckgasversorgung oder dergleichen, des Behältertisches und/oder eines mit dem Behältertisch drehfest verbundenen Maschinenoberteils angeordnet.

Bevorzugte Ausführungsformen der Erfindung sind zeichnerisch dargestellt. Es zeigen:
- Fig. 1: einen schematischen Längsschnitt durch eine Rundläufermaschine;
- Fig. 2: eine mögliche Ausgestaltung eines Behältertisches mit Lager und Motor; und
- Fig. 3: eine Detailansicht des Behältertisches der Fig. 2 mit einem Drehgeber.

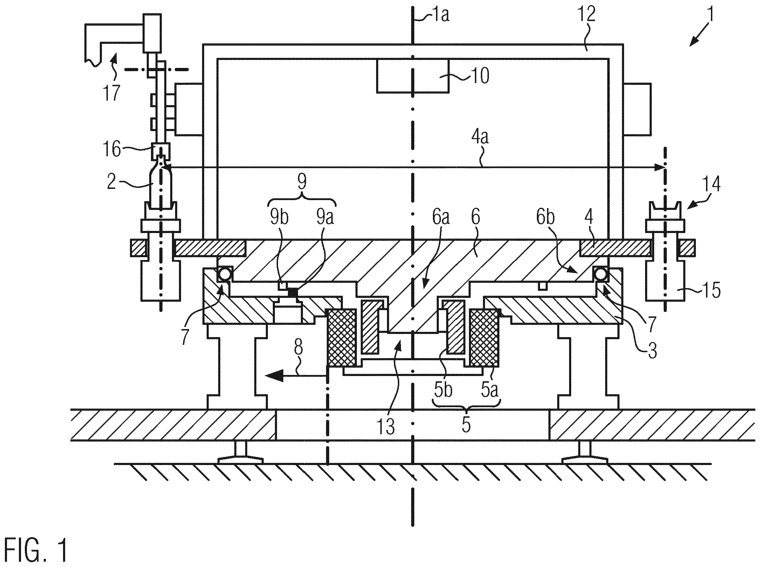

Wie die Fig. 1 erkennen lässt, umfasst die Rundläufermaschine 1 zur Behandlung von Behältern 2 ein feststehendes Untergestell 3, einen drehbaren Behältertisch 4 zur Aufnahme der Behälter 2 auf einem Teilkreis 4a und einen als Innenläufer ausgebildeten Motor 5 zum Direktantrieb des Behältertisches 4. Dieser kann dadurch um eine zentrale Mittelachse 1a der Rundläufermaschine 1 insbesondere kontinuierlich gedreht werden.

Der Motor 5 ist insbesondere ein Torquemotor mit einem außenliegenden Stator 5a und einem innenliegenden Rotor 5b.

Der Motor 5 ist mit dem Behältertisch 4 mittels einer Tragstruktur 6 verbunden. Dies ist in der Fig. 1 lediglich schematisch angedeutet. Die Tragstruktur 6 umfasst beispielsweise einen zentralen Verbindungsabschnitt 6a zur drehfesten Ankopplung an den Rotor 5b. Ferner umfasst die Tragstruktur 6 vorzugsweise einen äußeren Tragabschnitt 6b zur drehfesten Ankopplung und Abstützung des Behältertisches 4.

Die Tragstruktur 6 stützt sich mittels eines ringförmigen Lagers 7 auf dem stationären Untergestell 3 ab. Das Lager 7 ist insbesondere ein Axial-Radial-Lager zur Aufnahme von Axialkräften und Radialkräften während der Behandlung der Behälter 2.

Das Lager 7 stützt den Behältertisch 4 und/oder die Tragstruktur 6 in einem radial außerhalb des Motors 5 liegenden Bereich 8 ab, der beispielsweise bezüglich des Außenumfangs des Stators 5a definiert ist.

Im radial außenliegenden Bereich 8 ist ferner ein Drehgeber 9 für den Behältertisch 4 vorhanden. Der Drehgeber 9 umfasst vorzugsweise einen feststehenden / mit dem Untergestell 3 verbundenen Sensor 9a und eine am Behältertisch 4 oder an der Tragstruktur 6 ausgebildete / befestigte Maßverkörperung 9b für den Sensor 9a. Die Maßverkörperung 9a ist ein vollumfänglich ausgebildeter Längenmaßstab / Winkelmaßstab mit einem vom Sensor 9a erkennbaren Ursprung und wird vom Sensor 9a vorzugsweise berührungslos abgetastet.

Der Sensors 9a ist zur Übertragung von Drehlagendaten des Behältertisches 4 mit einer schematisch angedeuteten Steuerung 10 verbunden. Dies ist drahtlos oder drahtgebunden möglich.

Zur vereinfachten Medienanbindung eines schematisch angedeuteten Maschinenoberteils 12 der Rundläufermaschine 1 umfasst und/oder umschließt der Rotor 5b des Motors 5 vorzugsweise einen zentralen Kanal 13, der in der Fig. 1 lediglich schematisch angedeutet ist. Der zentrale Kanal 13 eignet sich für die Medienversorgung des Behältertisches 4 und/oder des Maschinenoberteils 12. Im Kanal 13 können Medienleitungen, Datenleitungen oder dergleichen vom stationären zum rotierenden Teil der Rundläufermaschine 1 geführt werden.

In der Fig. 1 sind schematisch ferner Drehteller 14 zur Aufnahme der Behälter 2, individuelle Antriebsmotoren 15 für die Drehteller 14 und Zentrierglocken 16 zum Einspannen der Behälter 2 auf den Drehtellern 14 dargestellt sowie eine Hubkurve 17 zum Absenken der Zentrierglocken 16 auf die Behälter 2.

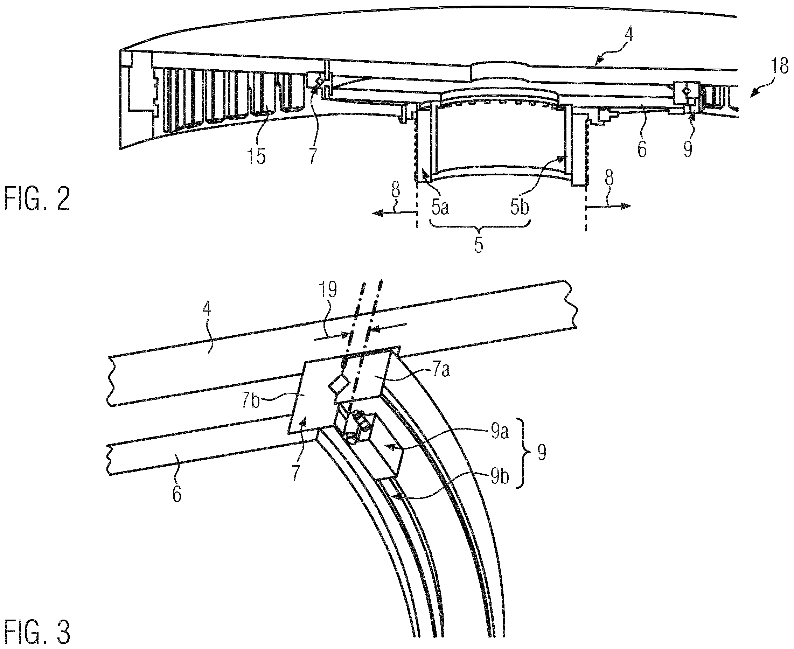

Die Fig. 2 verdeutlicht eine konkrete Ausgestaltung einer Antriebseinheit 18 der Rundläufermaschine 1 mit dem Behältertisch 4, dem Motor 5 mit Stator 5a und Rotor 5b, der Tragstruktur 6, dem Lager 7 und dem Drehgeber 9. Zu erkennen sind ferner die Antriebsmotoren 15 für die Drehteller 14.

In der Fig. 3 ist der Bereich des Lagers 7 und des Drehgebers 9 im Detail zu erkennen. Demnach ist der Drehgeber 9 vorzugsweise am Lager 7 angeordnet, insbesondere in einem radialen Abstand 19 vom Mittelpunkt des Lagerquerschnitts von höchstens 0,2 m.

Der Sensor 9a ist vorzugsweise feststehend angeordnet, beispielsweise an einem äußeren Lagerring 7a, der mit dem Gestell 3 verbunden ist. An der Tragstruktur 6 oder einem damit verbundenen inneren Lagerring 7b des Lagers 7 ist dann eine zugehörige Maßverkörperung 9b zur Abtastung durch den Sensor 9a ausgebildet.

Die Maßverkörperung 9b ist vorzugsweise auf einer nach außen weisenden Zylindermantelfläche angeordnet. Aufgrund der Anordnung des Drehgebers 9 in dem radial außerhalb des Motors 5 liegenden Bereich 8 ermöglicht die Maßverkörperung 9b eine vergleichsweise feine Winkelauflösung zur Drehlagenbestimmung des Behältertisches 4.

Wie insbesondere in der Fig. 3 zu erkennen ist, ist das Lager 7 vorzugsweise ein Axial-Radial-Lager und insbesondere ein vorspannbares Kreuzrollenlager. Das Lager 7 nimmt im Arbeitsbetrieb beispielsweise die von den Zentrierglocken 16 an die Behälter 2 und die Drehteller 14 übertragene Einspannkraft auf.

Der Drehgeber 9 ist vorzugsweise ein sogenannter Singleturn-Absolutwertgeber. Der Drehgeber 9 arbeitet vorzugsweise nach dem Prinzip eines induktiven Gebers oder eines kapazitiven Gebers. Je nach Einbaulage des Drehgebers 9 kann dieser aber auch nach dem Prinzip eines optischen Gebers arbeiten.

Der Sensor 9a des Drehgebers 9 ist vorzugsweise von unten her für Instandhaltungsmaßnahme, insbesondere für einen Austausch zugänglich.

Die Maßverkörperung 9b ist vorzugsweise ebenso von unten her für Instandhaltungsmaßnahmen, wie beispielsweise zur Kontrolle und/oder Reinigung, von unten her zugänglich und in einer bevorzugten Ausführungsform zudem austauschbar.

Die Genauigkeit des Drehgebers 9 beträgt vorzugsweise ± 20 µm absolut oder besser, also bezogen auf den Ursprung der Maßverkörperung 9b.

Der Teilkreis 4a hat vorzugsweise einen Durchmesser von wenigstens 1,5 m und insbesondere wenigstens 1,8 m.

Durch eine Anordnung des Drehgebers 9 im Bereich 8 radial außerhalb des Motors 5 und insbesondere im Bereich des Lagers 7, wie beispielsweise mit einem radialen Abstand 19 von höchstens 0,2 m, kann eine lastnahe Anbindung des Drehgebers 9 verwirklicht werden.

Dadurch lässt sich beispielsweise die niedrigste Lasteigenfrequenz im Bereich bis 10 Hz wirksam unterdrücken. Ferner ermöglicht der als Innenläufer ausgebildete Motor 5 aufgrund vergleichsweise geringer Motorträgheit eine Unterdrückung von Resonanzfrequenzen im Bereich oberhalb 100 Hz. Regelkreise zur Unterdrückung von Eigenresonanzen in der Antriebseinheit 18 der Rundläufermaschine 1 können daher effektiver arbeiten, beispielsweise indem vorrangig ein Bereich von 10 Hz bis 100 Hz amplitudengeregelt wird.

Auch aus diesem Grund ist eine Anordnung des Drehgebers 9 direkt am Lager 7, wie in der Fig. 3 dargestellt ist, besonders vorteilhaft. Hierbei vereinfacht die Befestigung des Sensors 9a am feststehenden Gestell 3 sowohl dessen elektrische Energieversorgung als auch die Übermittlung von Messsignalen. Prinzipiell könnte man die stationäre / umlaufende Befestigung des Sensors 9a / der Maßverkörperung 9b aber auch miteinander vertauschen.

Der Motor 5 ist vorzugsweise so am Gestell 3 bzw. der Tragstruktur 6 des Behältertisches 4 aufgehängt, dass er für Instandhaltungsmaßnahmen von unten her zugänglich ist und sich als Ganzes und/oder in Einzelteilen, beispielsweise der Rotor 5b, nach unten hin ausbauen lässt. Eine Demontage des darüber liegenden Behältertisches 4 und/oder seiner Tragstruktur 6 ist dann dafür nicht nötig.

Zusätzliche Aggregate für die Behälterbehandlung, die beispielsweise stationär am Untergestellt 3 angedockt werden, sind der Einfachheit halber nicht dargestellt. Die beschriebene Antriebseinheit 18und die zugehörige Drehlagenbestimmung für den Behältertisch 4 können flexibel für unterschiedliche Rundläufermaschinen zur Behälterbehandlung eingesetzt werden, beispielsweise für eine Direktdruckmaschine, eine Etikettiermaschine, einen Verschließer, einen Füller, eine Streckblasmaschine, einen Rinser oder eine Inspektionsmaschine.

Der Innenläufer-Direktantrieb des Behältertisches 4, also ohne zwischengeschaltetes Getriebe oder dergleichen, ermöglicht mit dem radial außen liegenden Drehgeber 9 sowohl hinsichtlich der Konzentrizität, der Rundlaufgenauigkeit, des Planlaufs und der Parallelität zum Gestell 3 vorteilhafte mechanische Laufeigenschaften als auch eine präzise, regelungstechnisch einfache und gut zu wartende Drehlagenbestimmung.

## Patentansprüche

1. Rundläufermaschine (1) zur Behandlung von Behältern (2), umfassend: ein feststehendes Untergestell (3); einen drehbaren Behältertisch (4) zur Aufnahme der Behälter (2); einen als Innenläufer ausgebildeten Motor (5) zum Direktantrieb des Behältertisches (4); ein Lager (7) zum Abstützen des Behältertisches (4) und/oder einer drehfest damit verbundenen Tragstruktur (6) am Untergestell (3) radial außerhalb des Motors (5); und einen Drehgeber (9) zur Drehlagenbestimmung des Behältertisches (4), **dadurch gekennzeichnet, dass** der Drehgeber (9) einen feststehenden und mit dem Untergestell (3) verbundenen Sensor (9a) und eine am Behältertisch (4) oder an der Tragstruktur (6) ausgebildete / befestigte Maßverkörperung (9b) für den Sensor (9a) umfasst und radial außerhalb des Motors (5) angeordnet ist.

2. Rundläufermaschine (1) zur Behandlung von Behältern (2), umfassend: ein feststehendes Untergestell (3); einen drehbaren Behältertisch (4) zur Aufnahme der Behälter (2); einen als Innenläufer ausgebildeten Motor (5) zum Direktantrieb des Behältertisches (4); ein Lager (7) zum Abstützen des Behältertisches (4) und/oder einer drehfest damit verbundenen Tragstruktur (6) am Untergestell (3) radial außerhalb des Motors (5); und einen Drehgeber (9) zur Drehlagenbestimmung des Behältertisches (4), **dadurch gekennzeichnet, dass** der Drehgeber (9) einen am Behältertisch (4) oder an der Tragstruktur (6) ausgebildeten / befestigten Sensor (9a) und eine feststehende und mit dem Untergestell (3) verbundene Maßverkörperung (9b) für den Sensor (9a) umfasst und radial außerhalb des Motors (5) angeordnet ist.

3. Rundläufermaschine nach Anspruch 1 oder 2, wobei der Drehgeber (9) im Bereich des Behältertisches (4) und/oder der Tragstruktur (6) in einem radialen Abstand (19) von weniger als 0,2 m vom Lager (7) angeordnet ist.

4. Rundläufermaschine nach Anspruch 1, wobei die Maßverkörperung (9b) unterhalb und/oder radial außerhalb des Lagers (7) angeordnet ist.

5. Rundläufermaschine nach wenigstens einem der vorigen Ansprüche, wobei der Motor (5) ein Torquemotor ist.

6. Rundläufermaschine nach wenigstens einem der vorigen Ansprüche, wobei das Lager (7) ein Axial-Radial-Lager und insbesondere ein Kreuzrollenlager ist.

7. Rundläufermaschine nach wenigstens einem der vorigen Ansprüche, wobei das Lager (7) eine Planlauf-Abweichung von höchstens 0,015 mm zum Behältertisch (4) hin aufweist und/oder eine Parallelität-Abweichung von höchstens 0,15 mm zum Behältertisch (4) und zum Untergestell (3) hin.

8. Rundläufermaschine nach wenigstens einem der vorigen Ansprüche, wobei der Behältertisch (4) einen Teilkreisdurchmesser (4a) von 1,5 bis 2,5 m hat.

9. Rundläufermaschine nach wenigstens einem der vorigen Ansprüche, wobei das Lager (7) radial zwischen dem Motor (5) und dem Teilkreis (4a) des Behältertisches (4) angeordnet ist.

10. Rundläufermaschine nach wenigstens einem der vorigen Ansprüche, die als Direktdruckmaschine, Etikettiermaschine, Verschließer, Füller, Streckblasmaschine, Rinser oder Inspektionsmaschine ausgebildet ist.

11. Rundläufermaschine nach wenigstens einem der vorigen Ansprüche, wobei der Stator (5a) des Motors (5) hängend und nach unten hin lösbar am Untergestell (3) befestigt ist.

12. Rundläufermaschine nach wenigstens einem der vorigen Ansprüche, wobei der Rotor (5b) des Motors (5) einen zentralen Kanal (13) umfasst und/oder umgibt.

13. Rundläufermaschine nach Anspruch 12, wobei innerhalb des Kanals (13) Leitungen zur Medienversorgung, insbesondere Energieversorgung, des Behältertisches (4) und/oder eines mit dem Behältertisch (4) drehfest verbundenen Maschinenoberteils (12) angeordnet sind.

## Claims

1. Rotary machine (1) for the treatment of containers (2), comprising: a stationary underframe (3); a rotatable container table (4) for receiving the containers (2); a motor (5) designed as an internal rotor for directly driving the container table (4); a bearing (7) for supporting the container table (4) and/or a supporting structure (6) connected thereto in a rotationally fixed manner on the underframe (3) radially outside the motor (5); and a rotary encoder (9) for determining the rotational position of the container table (4), **characterized in that** the rotary encoder (9) is arranged radially outside the motor (5) and comprises a sensor (9a) that is stationary and connected to the underframe (3) and a measuring standard (9b) for the sensor (9a), formed / fastened to the container table (4) or to the supporting structure (6).

2. Rotary machine (1) for the treatment of containers (2), comprising: a stationary underframe (3); a rotatable container table (4) for receiving the containers (2); a motor (5) designed as an internal rotor for directly driving the container table (4); a bearing (7) for supporting the container table (4) and/or a supporting structure (6) connected thereto in a rotationally fixed manner on the underframe (3) radially outside the motor (5); and a rotary encoder (9) for determining the rotational position of the container table (4), **characterized in that** the rotary encoder (9) is arranged radially outside the motor (5) and comprises a sensor (9a) that is formed / fastened to the container table (4) or to the supporting structure (6) and a measuring standard (9b) for the sensor (9a), that is stationary and connected to the underframe (3).

3. Rotary machine according to claim 1 or 2, wherein the rotary encoder (9) is arranged in the region of the container table (4) and/or the supporting structure (6) at a radial distance (19) of less than 0.2 m from the bearing (7).

4. Rotary machine according to claim 1, the measuring standard (9b) being located below and/or radially outside the bearing (7).

5. Rotary machine according to at least one of the preceding claims, the motor (5) being a torque motor.

6. Rotary machine according to at least one of the preceding claims, the bearing (7) being an axial-radial bearing and in particular a cross roller bearing.

7. Rotary machine according to at least one of the preceding claims, wherein the bearing (7) has an axial run-out of at most 0.015 mm to the container table (4) and/or a parallelism deviation of at most 0.15 mm to the container table (4) and to the underframe (3).

8. Rotary machine according to at least one of the preceding claims, the container table (4) having a pitch diameter (4a) of 1.5 to 2.5 m.

9. Rotary machine according to at least one of the preceding claims, the bearing (7) being arranged radially between the motor (5) and the pitch circle (4a) of the container table (4).

10. Rotary machine according to at least one of the preceding claims, which is designed as a direct printing machine, labeller, capper, filler, stretch blow-molding machine, rinser or inspection machine.

11. Rotary machine according to at least one of the preceding claims, the stator (5a) of the motor (5) being suspended and detachably attached to the underframe (3) in a downward direction.

12. Rotary machine according to at least one of the preceding claims, the rotor (5b) of the motor (5) comprising and/or surrounding a central channel (13).

13. Rotary machine according to claim 12, wherein lines for the supply of media, in particular energy supply, of the container table (4) and/or of a machine head (12) connected to the container table (4) in a rotationally fixed manner are arranged within the channel (13).

## Revendications

1. Machine de convoyage circulaire (1) destinée au traitement de récipients (2), comprenant :
un châssis fixe (3) ; une table à récipients (4) rotative permettant l'accueil des récipients (2) ; un moteur (5) réalisé sous forme de rotor interne et permettant l'entraînement direct de la table à récipients (4); un palier (7) permettant de supporter la table à récipients (4) et/ou une structure de support (6) reliée de manière solidaire en rotation audit palier et située au niveau du châssis (3) et radialement à l'extérieur du moteur (5) ; et un codeur rotatif (9) permettant de déterminer la position de rotation de la table à récipients (4), **caractérisée en ce que** le codeur rotatif (9) comprend un capteur (9a), fixe et relié au châssis (3), et un étalon de mesure (9b), formé/fixé au niveau de la table à récipients (4) ou au niveau de la structure de support (6) et destiné au capteur (9a), et est agencé radialement à l'extérieur du moteur (5).

2. Machine de convoyage circulaire (1) destinée au traitement de récipients (2), comprenant:
un châssis fixe (3); une table à récipients (4) rotative permettant l'accueil des récipients (2); un moteur (5) réalisé sous forme de rotor interne et permettant l'entraînement direct de la table à récipients (4); un palier (7) permettant de supporter la table à récipients (4) et/ou une structure de support (6) reliée de manière solidaire en rotation audit palier et située au niveau du châssis (3) et radialement à l'extérieur du moteur (5) ; et un codeur rotatif (9) permettant de déterminer la position de rotation de la table à récipients (4), **caractérisée en ce que** le codeur rotatif (9) comprend un capteur (9a), formé/fixé au niveau de la table à récipients (4) ou au niveau de la structure de support (6), et un étalon de mesure (9b) fixe et relié au châssis (3), et est agencé radialement à l'extérieur du moteur (5).

3. Machine de convoyage circulaire selon la revendication 1 ou 2, dans laquelle le codeur rotatif (9) est agencé dans la région de la table à récipients (4) et/ou de la structure de support (6) à une distance radiale (19) inférieure à 0,2 m par rapport au palier (7).

4. Machine de convoyage circulaire selon la revendication 1, dans laquelle l'étalon de mesure (9b) est agencé en dessous et/ou radialement à l'extérieur du palier (7).

5. Machine de convoyage circulaire selon au moins l'une quelconque des revendications précédentes, dans laquelle le moteur (5) est un moteur couple.

6. Machine de convoyage circulaire selon au moins l'une quelconque des revendications précédentes, dans laquelle le palier (7) est un palier axial-radial et en particulier un palier à rouleaux croisés.

7. Machine de convoyage circulaire selon au moins l'une quelconque des revendications précédentes, dans laquelle le palier (7) présente un battement axial inférieur ou égal à 0,015 mm par rapport à la table à récipients (4) et/ou un battement parallèle inférieur ou égal à 0,15 mm par rapport à la table à récipients (4) et au châssis (3).

8. Machine de convoyage circulaire selon au moins l'une quelconque des revendications précédentes, dans laquelle la table à récipients (4) présente un diamètre primitif (4a) compris entre 1,5 et 2,5 m.

9. Machine de convoyage circulaire selon au moins l'une quelconque des revendications précédentes, dans laquelle le palier (7) est agencé de manière radiale entre le moteur (5) et le cercle primitif (4a) de la table à récipients (4).

10. Machine de convoyage circulaire selon au moins l'une quelconque des revendications précédentes, réalisée sous forme de machine d'impression directe, d'étiqueteuse, de capsuleuse, de remplisseuse, de machine de moulage par soufflage avec étirage, de rinçeuse ou de machine d'inspection.

11. Machine de convoyage circulaire selon au moins l'une quelconque des revendications précédentes, dans laquelle le stator (5a) du moteur (5) est fixé au châssis (3) de manière suspendue et détachable vers le bas.

12. Machine de convoyage circulaire selon au moins l'une quelconque des revendications précédentes, dans laquelle le rotor (5b) du moteur (5) comprend et/ou entoure un canal central (13).

13. Machine de convoyage circulaire selon la revendication 12, dans laquelle des circuits permettant une alimentation en fluides, en particulier une alimentation en énergie, de la table à récipients (4) et/ou d'une partie supérieure de machine (12) reliée de manière solidaire en rotation à la table à récipients (4) sont agencés à l'intérieur du canal (13).
